Europäisches Patentamt

European Patent Office

Office européen des brevets

(19)

(11) **EP 0 609 398 B1**

(12) # FASCICULE DE BREVET EUROPEEN

(45) Date de publication et mention
de la délivrance du brevet:
**09.09.1998 Bulletin 1998/37**

(51) Int Cl.6: **G11B 20/10**, G11B 7/00,
G11B 7/013, G11B 11/10

(21) Numéro de dépôt: **93905444.1**

(22) Date de dépôt: **02.03.1993**

(86) Numéro de dépôt international:
**PCT/FR93/00208**

(87) Numéro de publication internationale:
**WO 93/18514 (16.09.1993 Gazette 1993/22)**

(54) **PROCEDE ET DISPOSITIF D'ENREGISTREMENT LECTURE D'INFORMATION SUR UN SUPPORT OPTIQUE OU MAGNETO-OPTIQUE MOBILE**

VERFAHREN UND ANORDNUNG ZUM AUFZEICHNEN-WIEDERGEBEN VON INFORMATION AUF EINEM BEWEGLICHEN OPTISCHEN ODER MAGNETO-OPTISCHEN AUFZEICHNUNGSTRÄGER

METHOD AND DEVICE FOR RECORDING-READING INFORMATION ON A MOVING OPTICAL OR MAGNETO-OPTICAL MEDIUM

(84) Etats contractants désignés:
**DE ES FR GB IT NL**

(30) Priorité: **03.03.1992 FR 9202498**

(43) Date de publication de la demande:
**10.08.1994 Bulletin 1994/32**

(73) Titulaire: **THOMSON-CSF**
**75008 Paris (FR)**

(72) Inventeur: **LE CARVENNEC, François**
**Thomson-CSF SCPI**
**F-92402 Courbevoie Cédex (FR)**

(74) Mandataire: **Albert, Claude et al**
**Thomson-CSF Propriété Intellectuelle,**
**13, Avenue du Président Salvador Allende**
**94117 Arcueil Cédex (FR)**

(56) Documents cités:
**EP-A- 0 319 102          EP-A- 0 414 517**
**EP-A- 0 430 811          FR-A- 2 664 420**
**US-A- 4 873 680**

- **I.E.E.E.: "Topical Meeting on Optical Data Storage", Technical Digest Series 1987, Vol.10, (Optical Society of America, Washington, D.C. 1987) pp. 64-67, SAITO et al.: " High Storage Density Optical Disks using Pit Edge Recording on Pb-Te-Se Thin Films", * voir page 66, lignes 4-11***

## Description

La présente invention concerne un support d'information mobile en particulier en forme de disque destiné à l'enregistrement-lecture d'informations le long de pistes.

Les supports actuellement utilisés sont dotés d'une structure à préformats réalisés pendant une phase de prégravure.

Ces préformats sont utilisés pour générer des signaux de service permettant le fonctionnement de l'enregistreur-lecteur : matérialisation de l'axe des pistes, focalisation, synchronisation, adresses, etc...

De nombreux procédés de prégravure ont été proposés. Parmi ceux-ci, on peut citer le procédé décrit dans la demande de brevet français n° 82 04218 déposée le 12 mars 1982 et publiée sous le n° 2 523 347 le 16 septembre 1983.

Le procédé décrit consiste à prévoir, le long de pistes virtuelles d'un support d'information, des éléments discrets non-contigüs matérialisant l'axe moyen desdites pistes et encadrant des zones destinées à l'enregistrement d'informations. Ces éléments discrets, appelés "drapeaux", doivent naturellement pouvoir être discriminés par quelque moyen que ce soit des éléments représentant l'information dite "utile".

Ce procédé est d'ailleurs conforme à l'une des solutions couramment retenues à l'heure actuelle pour la réalisation de disques optiques ou magnéto-optiques.

En réalité, il existe deux formats principaux qui ont été décrits dans des normes ISO : ISO 9171, 1 et 2, dans le cas de supports de type à lecture seule ou "Write Once" selon la terminologie anglo-saxonne; ou dans la norme ISO 10089 dans le cas des disques magnéto-optiques.

Il s'agit du format A et du format B.

Le premier format (format A) est dit continu-composite. Ce format est caractérisé par des sillons continus prégravés, éventuellement interrompus de place en place. Ces sillons servent au guidage du faisceau lors de l'écriture ou de la lecture d'information. Les sillons prégravés peuvent être disposés centrés entre deux pistes d'information ou au contraire, être confondus avec les pistes d'information.

Le second format (format B) est basé sur une méthode de suivi de piste à échantillonnage. La demande de brevet français précitée appartient à cette classe de format.

Selon la norme ISO, chaque piste circulaire comporte 32 secteurs numérotés de 0 à 31. Chaque secteur comporte lui-même 43 segments de 18 bytes chacun.

Le premier segment est appelé "Header" selon la terminologie anglo-saxonne et peut être comparé aux drapeaux décrits dans la demande de brevet français précitée.

En effet, il comporte un certain nombre d'éléments prégravés dont les fonctions sont précisées par la norme.

Parmi les fonctions principales remplies par ces élément prégravés, on peut citer, notamment, le suivi de pistes, la focalisation et la synchronisation. Ils doivent également assurer la fonction de discrimination précitée, encore appelée fonction de reconnaissance.

Un des problèmes rencontrés pendant la phase d'enregistrement des données est relatif à la maîtrise du facteur de forme des éléments gravés.

En effet, on fait appel à un effet thermique produit par un faisceau laser pour enregistrer un élément d'information. Physiquement, cette action se traduit par une altération d'une couche mince sensible du support. Cette altération peut prendre différentes formes : ablation, c'est-à-dire disparition de la couche, déformation, par exemple sous forme d'une bulle, ou encore un changement de phase cristallographique. La chaleur peut aussi provoquer avec l'aide d'un générateur de champ magnétique, une modification de la condition d'aimantation de ladite couche.

En lecture, on utilise également un faisceau laser de puissance plus faible pour lire ces altérations. On conçoit donc que l'on fasse appel à des effets non-linéaires. En-dessous d'un certain seuil d'échauffement, il n'y a pas altération de la couche.

Pour différentes raisons liées par exemple à la qualité du matériau constituant la couche, aux conditions d'ajustement du faisceau laser de gravure et notamment au réglage de puissance ainsi qu'à la focalisation, les dimensions de l'altération seront plus ou moins bien maîtrisées.

A ces causes il faut ajouter également l'effet dit thermique.

Puisqu'il faut dépasser un seuil de température pour qu'il y ait altération de la couche sensible, on conçoit que les conditions physiques d'enregistrement ne soient pas les mêmes selon qu'il y ait ou non un enregistrement précédant dans l'espace l'enregistrement en cours. Si oui, la montée en température sera plus rapide et donc le seuil plus vite atteint.

Pour pallier ce dernier problème, il a été proposé des solutions dans la demande de brevet français n° 90 08542 déposée le 5 juillet 1990 et publiée le 10 janvier 1992 sous le n° 2 664 420.

Ces phénomènes parasites se répercutent sur le facteur de forme ou rapport cyclique, c'est-à-dire en définitif les transitions entre les "0" et "1" logiques des informations enregistrées.

On a utilisé différents types de codages d'informations. Une première classe comprend les codes qui ne sont pas très sensibles au facteur de forme : code NRZ, etc...

L'inconvénient de ces codes est qu'ils offrent des performances moins intéressantes si on considère l'aspect densité d'enregistrement.

Pour augmenter cette densité d'enregistrement on a fait appel à des codes du type à modulation de longueur d'impulsion ou PWM, de l'anglo-saxon "Pulse Width Modulation". De façon plus générale, il s'agit des codes dans lesquels l'information est représentée par la position des fronts de transition des signaux.

On conçoit aisément que du fait de cette caractéristique. ce type de codes soit spécialement sensible à la qualité du facteur de forme.

Pour illustrer l'invention, de façon plus précise, dans ce qui suit, on représentera une information par un élément de gravure dont la longueur varie par incréments. Il est donc évident que, plus l'incrément est petit, plus la densité d'informations que l'on peut inscrire sur un disque est grande.

Si l'on se réfère à ce qui vient d'être rappelé, la précision sur la longueur d'un élément gravé, donc aussi d'un incrément, est limitée par un certain nombre d'effets parasites. Il est en outre difficile d'obtenir une bonne reproductibilité de ces longueurs.

Il s'ensuit que la densité maximale d'informations que l'on peut inscrire sur le support en est d'autant plus limitée.

Un procédé d'enregistrement-lecture d'informations selon le préambule de la revendication 1 est connu de I.E.E.E. "Topical Meeting on Optical Data Storage", Technical Digest Series 1987, Vol. 10, pages 64-67.

L'invention vise à pallier les inconvénients de l'art connu qui viennent d'être rappelés.

Pour ce faire, le procédé selon l'invention prévoit d'inscrire, de place en place, le long des pistes destinées à l'enregistrement des données, des éléments de gravure servant de référence de longueur.

Ces éléments de gravure sont inscrits en même temps et dans les mêmes conditions que l'on inscrit l'information proprement dite.

Bien que particulièrement adapté à l'enregistrement de données selon le format dit échantillonné, le procédé selon l'invention s'applique également au format dit continu-composite.

L'invention a donc pour objet un procédé d'enregistrement-lecture d'informations selon la revendication 1.

L'invention a encore pour objet un dispositif pour la mise en oeuvre d'un tel procédé selon la revendication 12.

L'invention sera mieux comprise et d'autres caractéristiques et avantages apparaîtront à l'aide de la description qui suit en référence aux figures annexées et parmi lesquelles :

- la figure 1 est un chronogramme illustrant une impulsion laser d'écriture,
- la figure 2 illustre schématiquement une portion de piste d'un support mobile d'information selon l'art connu,
- la figure 3 est un chronogramme illustrant des signaux de modulation,
- la figure 4 illustre schématiquement le détail d'un élément de gravure,
- la figure 5 est un chronogramme illustrant des signaux de lecture,
- la figure 6 illustre schématiquement une portion de piste d'un support mobile d'information selon une variante de réalisation de l'invention,
- les figures 7 et 8 illustrent schématiquement l'effet thermique apparaissant lors de l'enregistrement de données,
- la figure 9 illustre schématiquement un appareil enregistreur-lecteur de disque optique,
- la figure 10 illustre un dispositif permettant la mise en oeuvre du procédé de l'invention,
- la figure 11 est un chronogramme relatif aux principaux signaux utilisés par le dispositif de la figure 10,
- les figures 12 et 13 sont relatives à des détails de réalisation du dispositif de la figure 10.

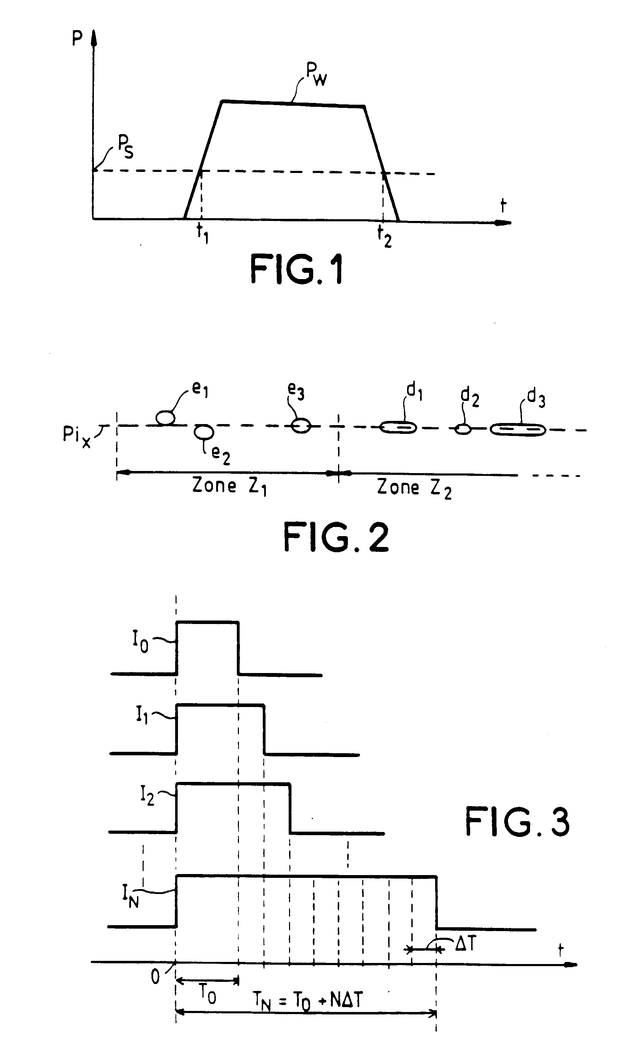

On va tout d'abord rappeler brièvement, par référence à la figure 1, le processus d'enregistrement d'un élément d'information sur un support mobile optique ou magnéto-optique. On supposera dans ce qui suit, pour fixer les idées et sans que cela soit limitatif qu'il s'agit d'un disque. En outre, on supposera également que la structure de ce disque est conforme au schéma d'enregistrement dit échantillonné.

Sur la figure 1 on a représenté une impulsion laser $P_w$ permettant l'enregistrement d'une information élémentaire, c'est-à-dire une impulsion d'écriture de forme sensiblement rectangulaire aux temps de montée et descente près. En ordonnée, on a représenté la puissance P transmise au médium et en abscisse le temps t.

On suppose qu'à partir d'un certain seuil $P_s$ l'écriture est effective. Cela se traduit, par exemple, par l'ablation de la couche sensible du support. Cette ablation est effective pendant l'intervalle de temps $t_1$-$t_2$.

Si on fait abstraction dans un premier temps de tous phénomènes parasites, le disque tournant à vitesse constante, à l'intervalle de temps ($t_1$-$t_2$) correspond de façon parfaitement bi-univoque, une longueur d'ablation de la couche.

Comme il a été indiqué, si on utilise une structure dite échantillonnée, on trouve des successions de deux types de zones le long des pistes circulaires du disque : des zones que l'on appellera "drapeaux" dans ce qui suit, contenant des éléments prégravés et des zones de post-gravure destinées à l'enregistrement des informations dites utiles.

On a représenté schématiquement une telle structure sur la figure 2.

La zone $Z_1$ est la zone "drapeaux". Elle comprend dans l'exemple décrit trois éléments prégravés $e_1$ à $e_3$ de forme généralement circulaire. Les éléments $e_1$ et $e_2$ ont été gravés de part et d'autre de l'axe fictif d'une piste $Pi_x$ de rang arbitraire x. A titre indicatif une valeur usuelle retenue pour la distance séparant le centre de ces éléments de l'axe de la piste est de l'ordre du quart de la distance séparant deux pistes. Ces éléments $e_1$ et $e_2$ sont habituellement utilisés pour assurer le suivi de piste lors de l'écriture ou de la lecture.

L'élément $e_3$ est centré sur la piste $Pi_x$ et sert d'élément de synchronisation pour les horloges de lecture ou d'écriture des données lues ou à enregistrer dans la zone $Z_2$.

La distance séparant les éléments $e_2$ et $e_3$ est telle qu'elle permet la reconnaissance sans ambiguïté de la zone "drapeau" par rapport aux autres zones. On parle de "distance unique".

D'autres méthodes peuvent être mises en oeuvre pour assurer cette reconnaissance.

La zone $Z_2$ est destinée à l'enregistrement des informations dites utiles. On a représenté sur la figure 3 trois éléments d'information $d_1$, $d_2$, et $d_3$; centrés par rapport à la piste $Pi_x$ mais de longueurs différentes.

On va supposer dans ce qui suit que l'on utilise un codage des informations basé sur la modulation de la durée d'une impulsion.

De façon plus précise, on suppose que la modulation est du type incrémental.

La figure 3 illustre les signaux électriques de modulation utilisés pour la commande d'inscription. L'impulsion la plus courte $I_0$ a une durée égale à $T_0$. La durée des autres impulsions $I_1$ à $I_N$ est donnée par la formule générale : $T_N = T_0 + N \Delta T$, formule dans laquelle $\Delta T$ est l'incrément de temps.

A titre d'exemple, pour $I_2$, $T_2 = T_0 + 2\Delta T$.

Ces signaux de modulation se traduiront par des impulsions d'écriture laser de durées équivalentes et donc par des gravures de longueurs proportionnelles à la durée d'application des impulsions laser.

Si on appelle $I_0$ la longueur minimale de l'élément de gravure inscriptible et qui correspond à $I_0$, la longueur d'un élément de gravure quelconque $d_x$ est donnée par la formule : $I_x = I_0 + x\Delta I$.

Pour fixer les idées, une valeur typique de $I_0$ est 0,8 µm. Les incréments $\Delta I$ dans ces condition, seront choisis égaux à 0,3 ou à 0,4µm.

Dans cette formule x représente le nombre d'incréments et $\Delta I$ un incrément dont la longueur est en relation bi-univoque avec $\Delta T$ en l'absence de phénomènes parasites.

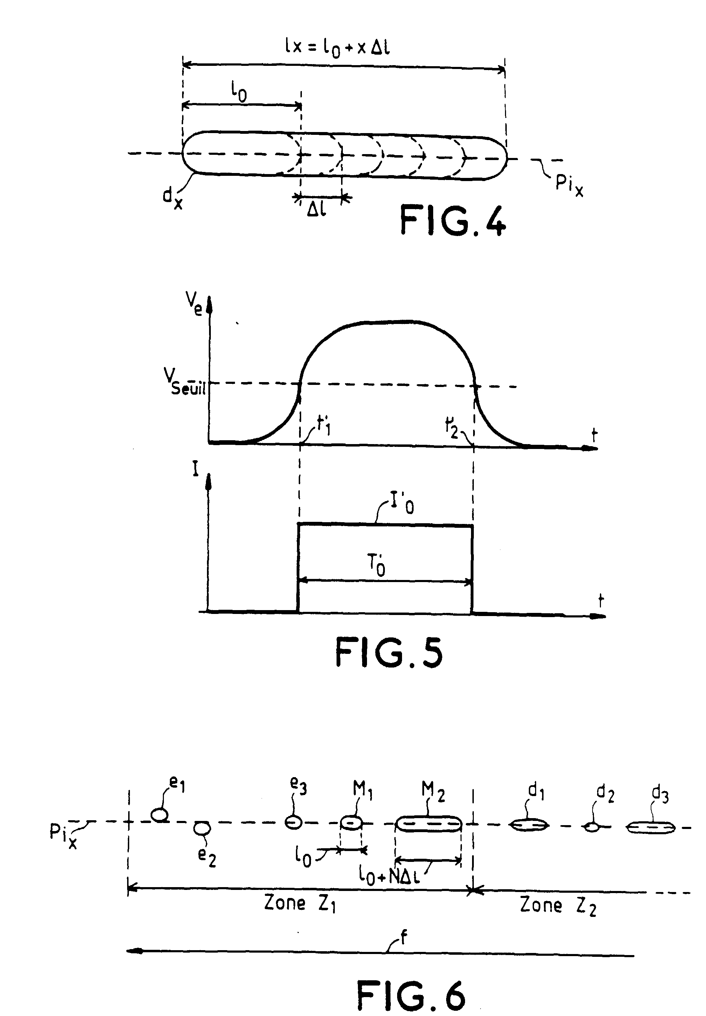

La figure 4 représente schématiquement l'élément de gravure $d_x$.

Lorsqu'on va lire, par voie optique, un tel élément de gravure, on obtient après conversion optique-électrique, un signal électrique $V_1$ en forme de cloche, comportant un plateau plus ou moins étendu selon la longueur de l'élément de gravure.

Un tel signal $V_1$ est illustré schématiquement sur la partie supérieure du chronogramme de la figure 5. Si on applique un seuil, $V_{seuil}$, à ce signal, on peut le transformer en un signal rectangulaire. Ce type de traitement est bien connu.

Sur la figure 5 on a supposé implicitement que l'élément de gravure correspondait au signal de modulation de durée minimale $T_0$ (figure 3). La longueur de l'élément de gravure est donc égale à $I_0$ (figure 4).

L'application du seuil $V_{seuil}$ fait que, comme illustré par la partie inférieure du chronogramme de la figure 5, l'impulsion I est une impulsion repérée $I'_0$ de durée $T'_0$

$= (t'_2 - t'_1)$.

Les instants $t'_1$ et $t'_2$ correspondent à l'intersection du seuil $V_{seuil}$ et de la courbe $V_1$.

Dans le cas présent, la courbe $V_1$ se réduit pratiquement à une courbe en cloche. La durée $T'_0$ de l'impulsion $I'_0$ est différente de $T_0$ et en général inférieure à celle-ci. Cependant, il existe une relation bi-univoque entre ces deux durées, en l'absence de tout phénomène parasite.

Ce n'est cependant pas le cas en réalité, ce pour les raisons qui ont été rappelées.

Pour une même durée $T_N = T_0 + N\Delta T$ du signal de modulation, on obtient, en écriture, des longueurs différentes d'altération. En d'autres termes, il n'y a pas reproductibilité.

En lecture, le phénomène peut être accentué. Un certain nombre de causes de dysfonctionnement subsistent : défocalisation, suivi imparfait de la piste, fluctuation de la vitesse, etc... Il en résulte que pour une même longueur d'ablation, la durée du signal lu peut fluctuer.

Il en est de même pour les incréments. Les incréments de temps $\Delta T$ (figure 3) se traduisent par des incréments de longueur $\Delta I$ (figure 4) qui a leur tour se traduisent, en lecture, par des incréments de temps que l'on appellera $\Delta T'$ dans ce qui suit. La reproductibilité de ces incréments de temps est donc également difficile à obtenir.

On conçoit cependant que, si on ne s'intéresse qu'à des intervalles de temps limités ou à des longueurs d'enregistrement également limitées, on peut espérer obtenir une reproductibilité des différents paramètres, suffisante pour une application considérée. Les deux conditions précitées sont d'ailleurs duales l'une de l'autre, car sur un support mobile, défilant à vitesse constante, il y a un rapport temps-espace également constant.

En effet dans les conditions précitées, les variations des caractéristiques du matériau, les variations de vitesse de défilement et des autres paramètres rappelés restent limitées sauf fonctionnement défectueux. Ce dernier cas sort naturellement du cadre de l'invention.

L'invention tire partie de cette constatation.

Selon l'une des caractéristiques principales de l'invention, on va inscrire concurremment à l'écriture des données d'information, des éléments de gravure que l'on appellera dans ce qui suit marques de référence. Ces marques de référence seront associées à des zones d'enregistrement de longueur limitée.

De façon plus précise ces marques seront gravées en nombre au moins égal à deux pour chaque zone d'information et serviront de référence de longueur. à tous les éléments de gravure enregistrés dans celle-ci. Elles différeront d'au moins un incrément de longueur $\Delta I$.

Dans une variante préférée, illustrée par la figure 6, les marques de référence seront post-gravées dans la zone que l'on a appelée "drapeau" : zone $Z_1$ dans un espace laissé libre de cette zone.

Sur cette figure, outre les éléments communs avec ceux de la figure 2, il est représenté deux marques $M_1$ et $M_2$, post-gravées dans la zone $Z_1$. Leurs positions précises dans la zone $Z_1$ et l'écart qui les sépare n'est pas critique. Il suffit que les fonctions remplies par les autres éléments de gravure ne soient pas perturbées par leur présence.

Toujours selon une variante préférée, il est souhaitable que l'une des marques, $M_2$ par exemple, soit une marque de longueur maximale $l_{max}$. Pour cette dernière $l_{max} = l_0 + N\Delta l$; N étant le nombre d'incréments maximum du signal de modulation. Cette disposition assure, dans le cas général, la précision optimale. L'autre marque $M_1$ aura une longueur minimale $l_0$.

L'ordre d'occurence de ces deux marques n'est pas non plus critique. Il suffit en général qu'il soit fixé à l'avance.

La flèche f sur la figure 6 indique le sens du défilement de la piste $P_{ix}$.

On va se référer à nouveau à la figure 3. Les paramètres $T_0$ et $\Delta T$ sont maîtrisables avec une grande précision et reproductibles. Il suffit de mettre en oeuvre des signaux d'horloge issus d'oscillateurs présentant une grande précision et une grande stabilité. De tels oscillateurs sont bien connus. La valeur N est une donnée connue à l'avance.

D'autre part, les éléments de gravure, $d_1$ à $d_3$ sur la figure 6, représentant de l'information sont réalisés dans une zone (zone $Z_2$) contigüe à la zone "drapeau" (zone $Z_1$) et concurremment à l'inscription des marques de référence, au temps de défilement près. On peut donc utiliser ces marques $M_1$ et $M_2$ comme étalon de longueur pour la zone contigüe : zone $Z_2$.

Pour fixer les idées, on suppose que la marque $M_1$ est la plus courte enregistrable et a pour longueur $l_0 = 0,8\ \mu m$..

On suppose également que le nombre d'incréments maximum N est égal à 10. Dans ces conditions, la longueur de la marque $M_2$ est égale à 4,8 $\mu m$, si les incréments ont une longueur égale à 0,4 $\mu m$. Cependant il doit bien être entendu, qu'à l'exception de la valeur N = 10, les autres valeurs, c'est-à-dire les longueurs. fluctuent d'une zone "drapeau" à l'autre. Elles ne servent de référence que pour la zone d'information associée, c'est-à-dire la zone d'information qui a été enregistrée en même temps que les marques et dans les mêmes conditions que celles-ci.

En lecture, les longueurs associées aux marques $M_1$ et $M_2$, respectivement $l_0$ et $(l_0 + N\Delta l)$, seront converties en informations de durée. A$(l_0+N\Delta l)$ correspondra un intervalle de temps $T'_N = T'_0 + N\Delta T'$. Connaissant N, on peut en déduire $\Delta T'$ par un calcul simple éliminant $T'_0$. En effet $(T'_N - T'_0) = N\Delta T'$ et $\Delta T' = \frac{(T'_N - T'_0)}{N}$.

Le processus de détermination de $\Delta T'$ est donc simple. Il suffit de détecter les transitions du signal I, aux instants $t'_1$ et $t'_2$ sur la figure 5, ce lors de la lecture des marques $M_1$ et $M_2$. A l'aide d'un signal d'horloge de référence, par exemple, on en déduit les durées $T'_0$ et $T'_N$.

N étant connu, tout moyen de calcul approprié permet de calculer $\Delta T'$.

La connaissance de $\Delta T'$ et de $T'_0$ va permettre de restituer avec précision l'information enregistrée, par comparaison à ces valeurs ou à des valeurs dérivées. Un exemple de réalisation d'un dispositif de mise en oeuvre du procédé de l'invention sera décrit ultérieurement.

Bien que la position des marques de référence $M_1$ et $M_2$ ne soit pas critique, il est naturellement nécessaire qu'elle soit fixée à l'avance pour qu'elles puissent être reconnues sans ambiguïté lors de la lecture.

Au lieu d'être enregistrées dans la zone "drapeau" (zone 1), les marques $M_1$ et $M_2$ peuvent également être enregistrées dans la zone $Z_2$ ou zone de données. Il est alors nécessaire de mettre en oeuvre un procédé de quelque nature que ce soit permettant de les identifier parmi les autres éléments de gravure. On peut, à titre d'exemple, post-graver des éléments d'information utilisés à cet effet ou réserver une position fixe dans la zone d'information.

Jusqu'ici, seul le format dit à échantillonnage a été considéré. Pour le format dit continu-composite, c'est une solution du type susnommé qui prévaut puisque les zones "drapeaux" sont absentes.

Bien qu'offrant, à priori, une précision plus grande, il n'est pas nécessaire que les marques $M_1$ et $M_2$ représentent respectivement, la marque la plus courte et la marque la plus longue.

Il suffit d'enregistrer deux marques $M_1$ et $M_2$ différant d'au moins un incrément de longueur $\Delta l$. Cet incrément, il faut le rappeler, correspond à l'incrément de temps $\Delta t$.

Si on considère deux signaux de modulation de durée $T_1$ et $T_2$, on a les relations suivantes :

$$T_1 = T_0 + N_1\Delta T$$

$$T_2 = T_0 + N_2\Delta T$$

dans lesquelles $N_1$ et $N_2$ sont des constantes connues, égales aux nombres respectifs d'incréments , et $\Delta T$ l'incrément de temps.

On suppose $N_2 > N_1$.

On déduit que $\Delta T$ est donné par la formule :

$$\Delta T = \frac{(T_2 - T_1)}{(N_2 - N_1)}$$

En lecture, après conversion, on retrouve une formulation similaire :

$$\Delta T = \frac{(T_2 - T_1)}{(N_2 - N_1)}$$

On peut en déduire par le calcul la valeur de $T'_0$ :

$$T'_0 = \frac{(T_1 + T_2) - (N_1 + N_2)\Delta T}{2}$$

On peut enfin, pour affiner le processus, utiliser plus de deux marques de référence.

A titre d'exemple non limitatif, on pourrait enregistrer, outre les marques $M_1$ et $M_2$ de longueur $l_0$ et $(l_0+N\Delta l)$, une troisième marque $M_3$ représentant une longueur moyenne. En supposant N pair, la longueur de cette marque serait $(l_0 + \frac{N}{2}\Delta l)$.

On a supposé jusqu'à présent que les fluctuations sur la longueur des marques de référence reflétaient fidèlement les variations locales des conditions de gravures, entre autres les variations locales des caractéristiques du matériau sensible.

Normalement, d'un site à l'autre, les conditions d'enregistrement de référence ne subissent que des changements limités. Il se peut, qu'en raison de phénomènes parasites transitoires, les fluctuations de longueurs des marques deviennent brutalement "aberrantes" ou puissent être considérées comme telles. Ce serait par exemple le cas, si pour le même signal de modulation de durée $T_0$, la marque $M_1$ variait en longueur du simple au double.

La position des marques peut aussi fluctuer de façon anormale. Du fait de leurs natures, les fluctuations de ce type ne devraient pas être prises en compte puisqu'elles ne correspondent pas à des fluctuations des paramètres locaux mais à des phénomènes parasites externes

Dans une variante préférée du procédé selon l'invention, les variations des paramètres liés aux marques de référence $M_1$ et $M_2$, et en premier lieu les fluctuations de longueurs sont mémorisées. On peut, pour ce faire, utiliser un procédé de mémorisation de type FIFO ou "First In First Out" selon la terminologie anglo-saxonne. A chaque instant un certain nombre de valeurs parmi les plus récentes sont disponibles. On peut donc en faire une moyenne et rejeter toute valeur supérieure ou inférieure à un pourcentage déterminé de cette valeur moyenne.

Dans ce dernier cas, on prendra, par exemple, la dernière valeur valide retenue pour $M_1$ et/ou $M_2$. C'est cette valeur (ou ces valeurs) qui serviront d'étalon de longueur pour la zone de donnée (Zone $Z_2$) contiguë et non la ou les valeurs courantes.

D'autres procédés sont également utilisables. Sans effectuer de moyenne, on peut rejeter les valeurs supérieures ou inférieures à deux limites prédéterminées.

On peut également procéder par interpolation entre la ou les valeurs (n - 1) et (n+1), n étant un nombre arbitraire relatif à une des paires $(M_1-M_2)$. (n-1) et (n+1) sont relatifs, respectivement aux paires de marques $(M_1-M_2)$ qui précèdent et qui suivent la paire de marques $(M_1-M_2)$ de rang n. Cela suppose cependant que la zone de données $Z_2$ lue après le passage de $(M_1-M_2)$ de rang n soit mise en mémoire.

Enfin, on peut décider que, si le phénomène parasite persiste ou se reproduit avec une fréquence anormale fixée à l'avance, il faille générer un signal d'alarme.

Dans tous les cas, il est nécessaire que la fréquence d'occurence de ces marques de référence soit suffisamment grande de manière à ce que l'intervalle de temps séparant la lecture de deux séries de marques consécutives soit pour sa part suffisamment faible pour rendre acceptables les dérives des paramètres d'enregistrement et/ou lecture.

A priori dans un format de type échantillonné, tel qu'il vient d'être décrit, la fréquence d'apparition des "drapeaux" est suffisante pour que cette condition soit remplie. Si tel n'était pas le cas, par exemple pour un matériau particulier formant la couche thermo-sensible, il peut être nécessaire de post-graver les marques de référence dans les zones "drapeaux" et/ou les zones de données, en plus grand nombre que les "drapeaux".

Le procédé selon l'invention ne nécessite qu'un très petit nombre d'informations supplémentaires non utilisables directement. Dans la variante préférée du procédé, ces informations supplémentaires, c'est-à-dire les marques de référence, peuvent d'ailleurs être enregistrées dans des zones (zone $Z_1$) non utilisables pour l'enregistrement des informations dites utiles (zone $Z_2$).

Le procédé permet donc de s'affranchir en grande partie des phénomènes parasites qui ont été rappelés et donc d'obtenir une meilleure reproductibilité.

En fin de compte, il permet de diminuer l'incrément de longueur et par ce biais d'augmenter la densité d'enregistrement. En effet un élément de gravure étant lu par comparaison avec une référence valable pour une plage de faible amplitude, la longueur des incréments est obtenue avec plus de précision.

Il reste cependant que, même sur une courte distance, l'effet dit thermique peut occasionner des fluctuations de la longueur des éléments de gravure. Ces fluctuations pourraient en partie annihiler les avantages apportés par l'invention.

On peut pallier cet effet parasite en appliquant l'enseignement de la demande de brevet français n° 90 08542 précitée.

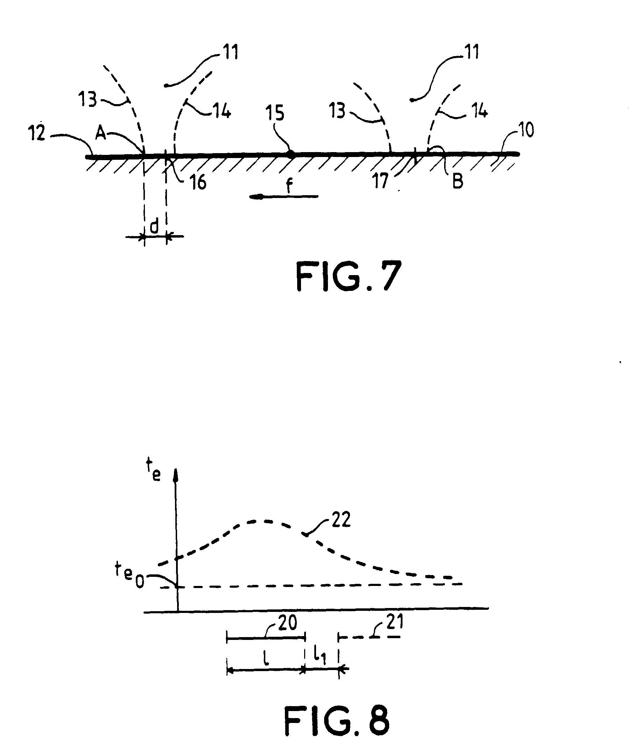

Cet effet parasite et des mesures permettant d'y pallier vont maintenant être brièvement rappelés en référence aux figures 7 et 8.

Sur la figure 7 on a représenté en coupe verticale un support d'information 10 se déplaçant dans le sens de la flèche f. Dans le cas d'un disque tournant autour d'un axe vertical, le déplacement est selon des cercles concentriques.

Pour inscrire des éléments d'information sur les pistes du support 10, on prévoit un faisceau laser 11 concentré sur la surface 12 de ce disque . Comme on l'a vu, l'effet du faisceau laser est de chauffer localement le support 10 de façon à provoquer dans la zone chauffée une modification physique qui sera ensuite lisible optiquement, en général avec le même faisceau laser, mais de puissance inférieure.

La surface du support 10 comporte, dans l'exemple, une couche mince sur laquelle la chaleur provoque une altération constituée par exemple par une ablation.

Le faisceau laser 11 est de section circulaire. Par rapport au sens f de déplacement du support 10, il présente une extrémité avant 13 et une extrémité arrière 14.

Dans l'exemple de la figure 7, le faisceau laser est appliqué sur le support 10 entre les points A et B. De façon plus précise, au début de la séquence d'inscription, le bord avant 13 du faisceau 11 se trouve au point A et, à la fin de la séquence d'inscription, le bord arrière 14 du faisceau 11 se trouve au point B.

On constate que l'élément de gravure 15 inscrit sur le support 10 présente un bord avant 16 qui ne coïncide pas avec le point A et un bord arrière 17 qui, lui non plus, ne coïncide pas avec le point B. Le décalage principal d est entre les points A et 16. Dans ce qui suit on se référera surtout à ce décalage.

Ces décalages signifient, d'une part, que l'élément de gravure 15 n'a pas exactement la position désirée et, d'autre part, que la longueur de cet élément d'information 15 est différente de la longueur désirée.

Le décalage temporel correspondant $\Delta\tau$ peut s'exprimer par la formule suivante :

$$\Delta\tau = r_0 + \Delta\tau_1$$

dans cette formule $\tau_0$ est un terme de valeur constante pour un même support d'enregistrement et le même type d'enregistreur et $\Delta\tau_1$ est un terme dont la valeur dépend des motifs précédemment enregistrés. De façon plus précise $\tau_0$ est la valeur du décalage quand on inscrit un élément isolé, sans élément qui le précède. Dans ces conditions, on montre que $\Delta\tau_1$ a une valeur négative.

Les paramètres caractéristiques de l'enregistreur qui interviennent pour définir $\tau_0$ sont notamment les dimensions de la tache d'écriture, sa puissance, et la vitesse de déplacement du support d'information par rapport au faisceau d'inscription.

Le décalage spatial d est dû au fait qu'il existe un retard entre le début de l'application du faisceau 11 sur le support 10 et le moment où la température de l'emplacement illuminé par le support atteint la valeur suffisante pour inscrire une information.

Sur la figure 8 on a représenté, en partie basse, en trait plein, l'élément de gravure 20 qui vient d'être inscrit et en traits interrompus un élément de gravure 21 qui doit être inscrit. La partie haute montre la température $t_e$ du substrat le long de la piste sur laquelle on effectue des marques. La température $t_{e0}$ est la température du support 10 dans son ensemble en l'absence d'échauffement, c'est-à-dire la température ambiante.

La courbe 22 de la figure 8 montre qu'immédiatement après la formation de l'élément de gravure 20, la température du support 10 à l'emplacement de cet élément de gravure est encore sensiblement supérieure à la température ambiante et que la température à l'emplacement voisin 21 est également supérieure à la température ambiante $t_{e0}$ bien qu'inférieure à la température à l'emplacement de l'élément de gravure 20.

Il résulte de ces considérations que le retard $\Delta\tau$ est plus faible quand un élément de gravure vient d'être inscrit à un emplacement précédent que dans le cas où le support 10 est à la température ambiante te0. C'est le terme (négatif) $\Delta\tau$ qui exprime cette dépendance de $\Delta\tau$ à l'égard des éléments précédemment inscrits. Ce terme $\Delta\tau_1$ dépend de la longueur 1 de l'élément de gravure 20 et de la distance $l_1$ séparant les éléments de gravure 20 et 21. L'inscription des éléments de gravure inscrite avant l'élément de gravure 20 apporte aussi une contribution au terme $\Delta\tau_1$. Toutefois il a été constaté qu'à partir du quatrième élément de gravure précédente, la contribution devient négligeable pour les formats et codes de modulation communément utilisés à ce jour.

La demande de brevet français précitée propose plusieurs variantes de réalisation propres à corriger $\Delta\tau_1$ et/ou $\tau_0$.

Dans le cadre de l'invention, c'est le premier décalage temporel, $\Delta\tau_1$, qui est le plus gênant puisque $\tau_0$ est sensiblement constant pour un support et un appareil enregistreur-lecteur.

Il sera donc le même pour les marques de référence $M_1$ et $M_2$ (figure 6) et pour les autres éléments de gravure quelque soit la zone considérée.

On ne va donc rappeler que les principales dispositions permettant de corriger le terme $\Delta\tau_1$, dispositions qui sont l'objet d'une des variantes de réalisation décrites dans la demande précitée.

Selon cette variante de réalisation, pendant la phase d'enregistrement, on corrige les deux termes $\tau_0$ et $\Delta\tau_1$ ou le seul terme $\Delta\tau_1$. Pour corriger ce terme $\Delta\tau_1$ on prévoit d'enregistrer dans une mémoire, qui peut être une des zones du support d'information, la loi de variation du décalage $\Delta\tau_1$ ou du décalage $\tau_0 + \Delta\tau_1$ en fonction des éléments d'informations précédemment inscrits et du temps séparant l'inscription en cours de l'inscription précédente.

La température en un emplacement du support dépend aussi de la longueur des éléments précédemment inscrits et de leur éloignement de l'endroit considéré.

Ainsi, on prévoit une mémoire avec des valeurs de $\Delta\tau_1$ en fonction de la longueur des éléments précédemment inscrits et de leur éloignement de l'élément à inscrire. On peut ne tenir compte que d'un seul élément précédent. Pour une meilleure précision du calcul on fera intervenir plusieurs éléments qui précèdent; de toute façon, il ne sera en général pas nécessaire de tenir compte de plus de quatre éléments précédents, comme il a été indiqué.

Ces tableaux de valeur sont préalablement déterminés en usine chez le fabricant de support et/ou d'enregistreur-lecteur.

De préférence, le tableau est introduit en mémoire du support d'information dans des zones de données préenregistrées lorsqu'il s'agit d'un format dit échantillonné. Ce tableau sera donc spécifique au support concerné. Toutefois les valeurs de $\Delta\tau_1$ pourront varier d'un type d'enregistreur à un autre.

Quand on a affaire à un disque tournant à vitesse constante, les dimensions des éléments d'informations varient en fonction du rayon de la piste sur laquelle se trouve l'élément. Dans ce cas, la loi (ou tableau) de détermination des valeurs de $\Delta\tau_1$ tiendra compte du rayon. En général les valeurs $\Delta\tau_1$ varient de façon linéaire avec le rayon.

Pour plus de détails quant au dispositif permettant la mise en oeuvre du procédé qui vient d'être rappelé, on se reportera avec profit à la demande de brevet précitée.

On va maintenant décrire un dispositif permettant la mise en oeuvre du procédé selon l'invention.

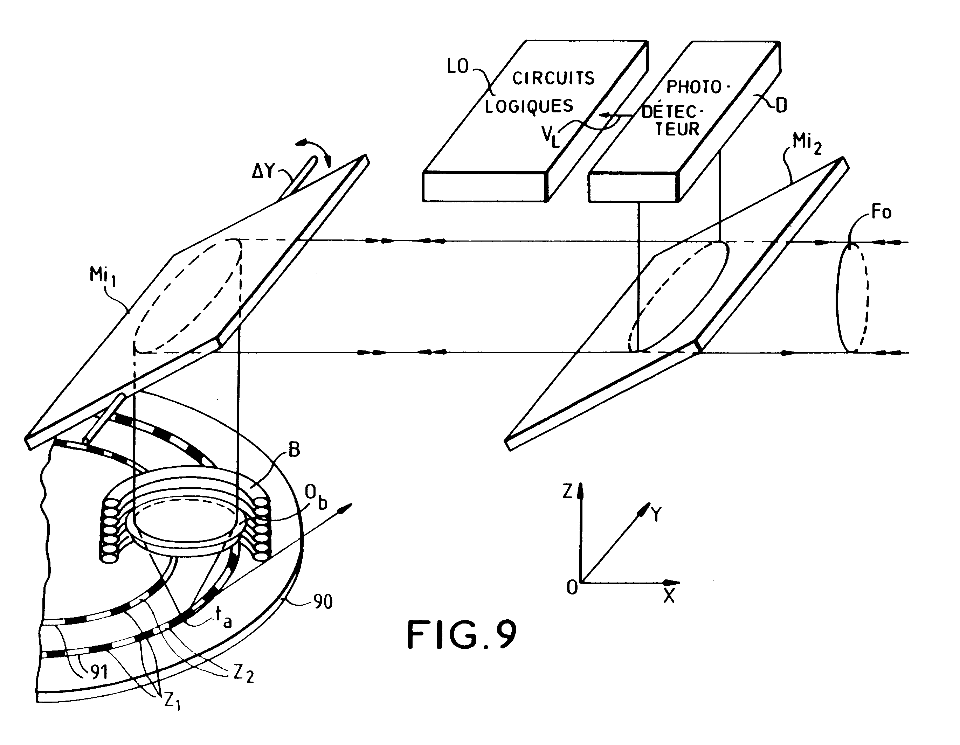

Pour fixer les idées, sans que cela soit limitatif de la portée de l'invention, on va tout tout d'abord rappeler brièvement le fonctionnement d'un appareil enregistreur-lecteur de disque optique en référence à la figure 9.

La figure 9 illustre, de façon schématique, un exemple d'appareil d'enregistrement-lecteur sur un support par voie optique. Un disque 90 tournant dans un plan autour d'un axe parallèle au troisième axe du trièdre de référence XYZ comporte sur sa face supérieure une couche de matériau thermo-sensible dans laquelle des informations ont été enregistrées le long des pistes 91. Ces pistes comportent également des drapeaux $Z_1$ associés à un code spécifique conformément à ce qui a été décrit et des zones $Z_2$ destinées à l'enregistrement des informations. Le disque, d'un diamètre d'environ 30 cm, est animé d'un mouvement de rotation communiqué par un moteur d'entraînement solidaire du châssis du système optique d'enregistrement-lecture. De façon typique, les pistes, au nombre par exemple de 40 000, sont inscrites à l'intérieur d'une couronne centrée sur l'axe de rotation et de largeur égale à environ 8 cm. Le nombre de drapeaux inscrits par piste circulaire concentrique doit être suffisant pour s'affranchir de phénomènes parasites liés à la nature du support ou à la fluctuation de la vitesse de rotation. Typiquement, on inscrit entre 1 300 et 3 500 drapeaux par pistes, compte-tenu des données précédentes.

Dans l'exemple de réalisation illustré par la figure 9, le dispositif d'accès à une piste prédéterminée du disque comprend une partie fixe comportant une source d'énergie (non-représentée) générant un faisceau de rayons parallèles $F_0$ et une partie mobile constituée par la tête d'enregistrement-lecture proprement dite. Comme il est connu, cette dernière comprend un objectif du type microscope $O_b$, solidaire d'une bobine électromagnétique B se déplaçant dans le champ magnétique d'un aimant permanent (non-représenté) assurant l'asservissement vertical ou focalisation et un miroir galvanométrique $Mi_1$ assurant l'asservissement radial. Le miroir galvanométrique $Mi_1$ est mobile autour d'un axe $\Delta_y$ parallèle à l'axe OY du trièdre de référence de manière à assurer ledit asservissement radial. Le faisceau $F_0$ est focalisé en une tache $t_a$ à un endroit déterminé du disque sur une des pistes 91 précitées. On suppose ici que le système est du type monofaisceau-monopiste, c'est-à-dire un système dans lequel le faisceau unique $F_0$ sert alternativement à l'écriture et à la lecture ainsi que pour assurer les fonctions de suivi radial de piste et de focalisation. Cet aspect sort du cadre de l'invention.

Pour détecter le faisceau de lecture réfléchi par le disque, on interpose, par exemple, une lame semi-transparente $Mi_2$ sur le trajet du faisceau unique $F_0$. Le faisceau réfléchi par le disque est alors détecté par des moyens photodétecteurs D qui génèrent le signal $V_1$. Celui-ci est transmis à des circuits logiques LO de traitement de signal.

Ces derniers circuits, outre les circuits communs à l'art connu, incorporent des circuits spécifiques à l'invention et qui vont maintenant être décrits.

La lecture d'un élément d'information, tels que $d_1$, $d_2$ ou $d_3$ sur la figure 6, donne comme information, après conversion, une des impulsions de durées que l'on appellera $T'_x$. Il faut relier ces durées lues aux durées initiales du signal utilisé pour la modulation. En d'autres termes, il faut en déduire le nombre d'incréments associés. On a vu, à titre d'exemple, qu'à la durée $T_0$ correspondait une durée $T'_0$ et qu'à un incrément de temps $\Delta T$ correspondait $\Delta T'$.

Selon l'invention, on va effectuer des comparaisons des valeurs lues, directes ou indirectes, avec des valeurs de références valables pour une zone $Z_2$ d'étendue limitée. Ces valeurs sont celles dérivées de la lecture des marques $M_1$ et $M_2$.

Dans la variante préférée, c'est la zone $Z_2$ associée à une seule zone "drapeau" qui contient les marques $M_1$ et $M_2$.

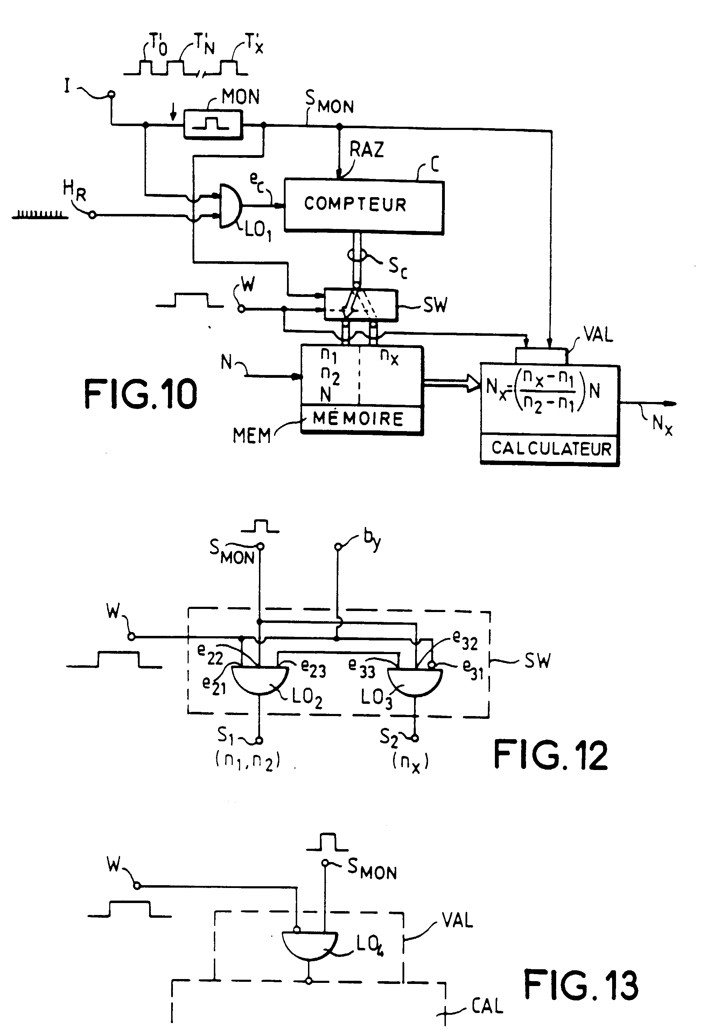

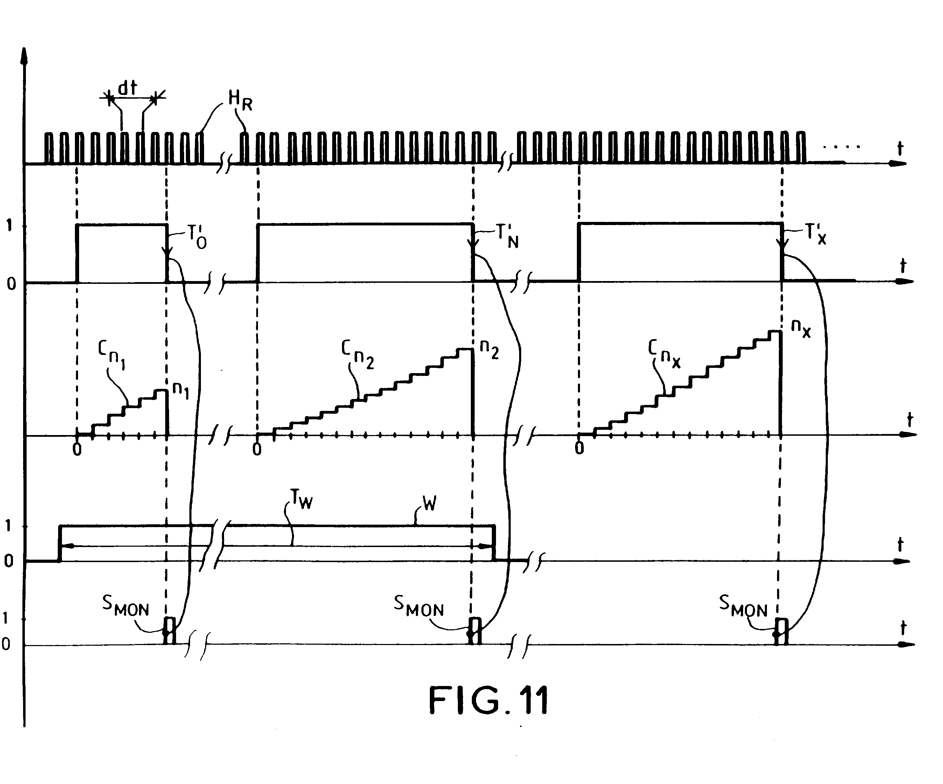

Diverses méthodes peuvent être mises en oeuvre pour arriver à ce résultat. On va décrire, à titre d'exemple non limitatif, un circuit de mise en oeuvre du procédé de l'invention par référence aux figures 10 et 11.

La figure 10 illustre schématiquement le circuit utilisé. On fait appel à un signal d'horloge de fréquence élevée devant la fréquence d'occurence des signaux impulsionnels représentant les informations ainsi que les signaux références de durées dérivés des marques $M_1$ et $M_2$.

Il faut naturellement que la fréquence du signal $H_R$ soit très stable. En outre plus la fréquence sera élevée, plus la précision obtenue dans le processus de restitution des signaux d'information sera grande. Typiquement on utilisera un rapport supérieur à dix entre la fréquence d'occurence et la fréquence des signaux d'horloge.

Le chronogramme de la figure 11 illustre ces différents signaux. Le signal d'horloge est repéré $H_R$ sur la figure et les signaux références de durées, $T'_0$ et $T'_N$.

On a représenté également un signal d'information repéré $T'_x$.

Si l'on se reporte à nouveau à la figure 10, l'élément principal du circuit pour la mise en oeuvre du procédé de l'invention, dans cette variante de réalisation, est un compteur C.

Il reçoit le signal d'horloge $H_R$ sur une entrée $e_c$ par l'intermédiaire d'un circuit logique $LO_1$. Celui-ci effectue la fonction logique "ET" en combinant le signal de lecture I et le signal d'horloge $H_R$. Le signal I est obtenu à partir du signal $V_1$ (figure 9) de la manière qui a été explicitée en référence à la figure 5. Le compteur ne peut donc compter les impulsions d'horloge $H_R$, comme illustré sur la figure 12, qu'en présence des signaux impulsionnels lus : périodes $T'_O$, $T'_N$ et plus généralement $T'_x$.

Ce compteur C délivre successivement sur un bus $S_C$ connecté à une sortie parallèle un mot binaire image les états de comptage : $C_{n1}$, $C_{n2}$ et $C_{nx}$ (figure 12). Ces états se traduisent par des mots binaires $n_1$, $n_2$ et $n_x$.

En d'autres termes, le compteur C convertit les durées $T'_0$, $T'_n$ et $T'_x$ en une suite de nombres $n_1$, $n_2$ et $n_x$ proportionnels à ces durées.

On suppose que les circuits logiques LO de la figure 9 génèrent un signal W pendant une fenêtre de temps englobant les impulsions $T'_0$ et $T'_N$. Si on se place dans le cadre d'un format d'enregistrement de type dit échantillonné, il suffit de détecter la position des drapeaux pour générer un tel signal. Dans le cas général, la position des marques M1 et $M_2$ étant connue, la génération d'un tel signal W n'offre aucune difficulté .

On a également besoin d'un signal $S_{MON}$, généré lors de la détection des fronts descendants des signaux $T'_0$, $T'_N$ et $T'_x$. Pour ce faire, on peut utiliser un monostable MON déclenché sur les fronts descendants des signaux $T'_0$ à $T_x$. Celui-ci délivre en sortie le signal impulsionnel $S_{MON}$.

Ce signal est tout d'abord utilisé pour remettre à l'état initial le compteur. De façon préférentiel, il sera remis à l'état zéro. Le signal est transmis à une entrée RAZ prévue à cet effet.

Pour être utilisables ultérieurement, les mots binaires $n_1$, $n_2$ et $n_x$ doivent être mémorisés. A cette fin, on utilise une mémoire MEM. Pour la facilité de l'explication, on suppose que cette mémoire comporte deux zones distinctes. Une première zone est destinée à mémoriser des valeurs permanentes, comme le nombre maximum d'incréments N ou semi-permanentes, les nombres $n_1$ et $n_2$ qui ne varient que lorsqu'on lit une nouvelle zone $Z_1$, c'est-à-dire de nouvelles marques de référence $M_1$ et $M_2$.

Une deuxième zone est utilisée pour enregistrer les valeurs successives $n_x$ correspondant aux éléments d'informations $d_1$, $d_2$ ou $d_3$. Un circuit logique d'aiguillage SW reçoit la sortie parallèle du compteur $S_C$. L'aiguillage entre l'une et l'autre des deux zones mémoires est conditionnée par l'état du signal fenêtre de temps W. En outre, la mémorisation effective s'effectue à la détection des fronts descendants de signaux $T'_0$ à $T'_x$.

Pour ce faire, elle est conditionnée par l'apparition du signal $S_{MON}$.

La remise à zéro du compteur doit s'effectuer après ladite mémorisation. Il est donc nécessaire de prévoir un délai avant la remise à zéro effective. De telles dispositions sont connues.

En résumé, il y a donc deux phases principales : une phase de mise en mémoire des valeurs de références $n_1$ et $n_2$ et une phase de mise en mémoire successives des différentes valeurs $n_x$.

Ces valeurs vont permettre la détermination des nombres d'incréments attachés à chaque éléments d'information et donc leur restitution en lecture.

En effet, si l'on appelle dt l'intervalle de temps séparant deux impulsions d'horloge $H_R$ consécutives, les équations suivantes décrivent la méthode de mise en oeuvre pour la restitution des informations :

pour $T'_O$ on a $T'_O = n_1 dt$
pour $T'_N$ on a $T'_N = n_2 \, dt = T'_O + N \, \Delta T'$
pour $T'_x$ on a $T'_x = n_x \, dt = T'_O + N_x \, \Delta T'$

équations dans lesquelles N est le nombre maximum d'incréments et $N_x$ le nombre d'incréments d'un élément d'information quelconque $d_x$.

En simplifiant, on en déduit la valeur de $N_x$ :

$$N_x = N \left( \frac{n_x - n_1}{n_2 - n_1} \right)$$

Suite à des imprécisions du comptage, par exemple des imprécisions dues aux instants d'occurence relatifs des fronts descendants et des impulsions d'horloge, le nombre $N_x$ ainsi calculé pourrait ne pas être un nombre entier. On prendra dans ce cas la valeur entière du nombre $N_x$.

Pour effectuer le calcul précédemment décrit, on utilise tout moyen approprié de calcul numérique, moyen que l'on a appelé calculateur CAL sur la figure 10 et qui reçoit de la mémoire MEM les valeurs N, $n_1$, $n_2$ et $n_x$.

On doit cependant remarquer que les calculs successifs des nombres $N_x$ doivent s'effectuer en dehors de la période d'acquisition des valeurs $n_1$ et $n_2$ et entre les acquisitions de deux nombres successifs $n_x$. Pour ce faire, un circuit de validation appelé VAL a été représenté sur la figure 10.

A cet effet, il reçoit le signal fenêtre de temps W et le signal de détection de front descendant $S_{MON}$.

Dans la réalité, la mémoire MEM peut être constituée simplement d'une suite de registres.

Dans une autre variante, non illustrée, la mémoire et le calculateur peuvent être confondus en un seul organe à base de mémoires de type à lecture seul programmable ou PROM, selon la terminologie anglo-saxonne, dans laquelle sont enregistrées les lois permettant les calculs.

On peut également remarquer qu'il n'est pas strictement nécessaire d'enregistrer les différentes valeurs de $n_x$. Dans une variante non illustrée, on pourrait transmettre via l'aiguilleur $S_c$, cette valeur directement au calculateur. Il en est de même pour N, qui pourrait être une valeur cablée transmise en permanence au calculateur.

Le circuit d'aiguillage SW peut être réalisé à l'aide de portes en logique combinatoire. Un exemple de réalisation est illustré par la figure 12.

Le circuit SW comporte deux séries de portes repérées $LO_2$ et $LO_3$ de type "ET" logique à trois entrées. La deuxième porte, $LO_3$ comporte une entrée inverseuse $e_3$ parmi ses trois entrées.

Les deux portes $LO_2$ et $LO_3$ reçoivent sur leurs entrées, respectivement $e_{21}$ et $e_{31,}$ le signal fenêtre de temps W et sur leurs entrées, $e_{22}$ et $e_{32}$, le signal $S_{MON}$.

On a vu que le signal véhiculé par le bus $S_C$ de la figure 10 est un mot binaire multibit représentant l'état du compteur C. Chaque bit $b_y$ de ce mot binaire est envoyé sur une des entrées $e_{23}$ et $e_{33}$ des circuits "ET" logiques $LO_2$ et $LO_3$.

Par ce biais, les bits des mots $n_1$ et $n_2$ représentatifs des durées respectives $T'_0$ et $T'_N$ sont transmis sur les sorties $S_1$ des circuits logiques de la série $LO_2$ pendant l'intervalle de temps W (figure 11) de la fenêtre de temps W et les bits des mots $n_x$, représentatifs des durées successives $T'_x$ sur les sorties $S_2$ des circuits logiques de la série $LO_3$, en dehors de cet intervalle de temps $T_W$.

Le circuit de validation VAL, comme représenté sur la figure 13, peut être réalisé simplement par une porte logique "ET", $LO_4$ à deux entrées dont l'une est inverseuse. L'entrée directe reçoit le signal $S_{MON}$ et l'entrée inverseuse le signal fenêtre de temps W. Le calcul des valeurs $N_x$ est donc initialisé sur la détection des fronts descendants et seulement en dehors de l'intervalle $T_W$. L'utilisation ultérieure de $N_x$ sort du cadre de l'invention. Le traitement de cette valeur s'effectue selon l'art connu.

L'invention n'est pas limitée aux seules variantes de réalisation des procédés et dispositifs précisément décrites.

Bien que plus particulièrement intéressante dans le cadre d'un format d'enregistrement dit à échantillonnage, elle s'applique également au format dit continu-composite.

Elle n'est pas non plus limitée au seul code à modulation de largeur d'impulsions du type décrit mais s'applique à tous les codes dans lesquels la position des transitions représente de l'information et donc doit être déterminée avec précision.

Elle s'applique de façon plus générale à tous les cas pour lesquels l'enregistrement fait appel à une méthode ne permettant pas de maîtriser avec suffisamment de précision le facteur de forme. C'est notamment le cas lorsqu'on fait appel à un effet thermique pour l'enregistrement, effet non linéaire origine en grande partie des phénomènes dont on désire s'affranchir. Pour surmonter ce problème, l'invention prévoit la formation de marques références de longueurs associées à une zone proche d'enregistrement d'éléments d'information, formation effectuée dans les mêmes conditions que pour les éléments d'information.

## Revendications

1. Procédé d'enregistrement-lecture d'informations le long de pistes d'un support mobile animé d'une vitesse de défilement uniforme comprenant une phase d'enregistrement desdites informations, cette phase comprenant une étape de formation d'altérations ($d_1$ à $d_3$) de longueurs variables d'une couche de matériau du support à l'aide de moyens de conversion de signaux d'informations impulsionnels ($I_0$ à $I_N$) de durées variables, les transitions entre des régions altérées et des régions non altérées de ladite couche représentant des informations, et une étape supplémentaire de formation d'une altération servant de référence de longueur; et une phase de lecture utilisant ladite référence de longueur pour la restitution des informations enregistrées caractérisé en ce que l'étape supplémentaire comprend la formation d'une série de séquences d'altérations ($M_1$, $M_2$) de ladite couche de longueurs différentes et en nombre au moins égal à deux à l'intérieur de chaque séquence à l'aide de moyens de conversion, chaque séquence d'altérations étant associée à une zone particulière (zone $Z_2$) dans laquelle sont formées les altérations ($d_1$ à $d_3$) représentant des informations et formant référence de longueurs pour cette zone ($Z_2$); et en ce que la phase de lecture comprend une étape de lecture des altérations ($M_1$, $M_2$) référence de longueurs et leur conversion en signaux impulsionnels, référence de durée pour la zone ($Z_2$) associée, une étape de lecture des altérations ($d_1$ à $d_3$) représentant des informations formées dans lesdites zones associées (zone $Z_2$) et de leur conversion en signaux impulsionnels et une étape de restitution des informations enregistrées par comparaison avec les signaux impulsionnels de référence de durée.

2. Procédé selon la revendication 1, caractérisé en ce que les signaux d'information impulsionnels ($I_0$ à $I_N$) étant des signaux de modulation codés numériquement en durée, par sauts d'incréments de temps (AT), lesdites altérations ($M_1$, $M_2$) référence de longueurs sont réparties sur le support par paires et formées par conversion de signaux impulsionnels d'une première durée ($T_0$) et d'une seconde durée ($T_0 + N\Delta T$), ces durées différant d'au moins un incrément de temps ($\Delta T$).

3. Procédé selon la revendication 2, caractérisé en ce que ladite première durée ($T_0$) est choisie telle que l'altération ($M_1$) obtenue à l'aide du signal de cette durée ait une longueur minimale ($I_0$), cette longueur

étant en relation bi-univoque avec une durée minimale ($T_0$) des signaux de modulation, et ladite seconde durée ($T_0 + N\Delta T$) est choisi telle que l'altération ($M_2$) obtenue à l'aide du signal de cette durée ait ladite longueur minimale ($l_0$), à laquelle est ajouté un nombre déterminé d'incréments N de longueur ($\Delta l$), N étant égal au nombre maximum d'incréments de temps ($\Delta t$) des signaux de modulation; et en ce que l'étape de restitution des informations enregistrées comprend la détermination des durées ($T'_0$, $T'_N$) des signaux convertis correspondant aux altérations ($M_1$, $M_2$) servant de référence de longueurs, et la détermination, à partir de ces durées, de paramètres en relation bi-univoque avec ladite durée minimale ($T_0$) et l'incrément de temps ($\Delta T$).

4. Procédé selon la revendication 3, caractérisé en ce que l'étape de restitution comprend le calcul de la durée d'un incrément de temps par la soustraction à la durée ($T'_N$) du signal résultant de la conversion de l'altération ($M_2$) de longueur maximale ($l_0 + N\Delta l$), de la durée ($T'_0$) du signal résultant de la conversion de l'altération ($M_1$), de longueur minimale ($l_0$), suivie de la division par ledit nombre N, cet incrément de temps servant de référence pour ladite zone (zone $Z_2$) associée.

5. Procédé selon l'une quelconque des revendications 1 à 4, caractérisé en ce que les fluctuations des paramètres associés aux marques de référence ($M_1$, $M_2$) sont mémorisées et en ce que des comparaisons sont effectuées avec des valeurs de référence pour ignorer les marques dont lesdits paramètres associés sortent d'une gamme prédéterminée.

6. Procédé selon l'une quelconque des revendications 1 à 5, caractérisé en ce que, ledit support étant muni d'une couche thermosensible superficielle, les altérations ($d_x$) sont constituées par une ablation localisée de ladite couche par irradiation de celle-ci à l'aide d'un faisceau laser.

7. Procédé selon l'une quelconque des revendications 1 à 6. caractérisé en ce que ledit support comportant en alternance, répartis le long des pistes, des zones d'un premier type (zone $Z_1$) dans lesquelles sont formées des altérations pendant une phase préliminaire de pré-enregistrement, et des zones d'un second type (zone $Z_2$) destinées à l'enregistrement desdites informations, les séquences d'altérations ($M_1$, $M_2$) référence de longueurs sont formées dans une région déterminée des zones du premier type et sont associées à une zone (zone $Z_1$) contiguë du second type (zone $Z_2$).

8. Procédé selon la revendication 7, caractérisé en ce qu'il comprend, dans une phase préliminaire, une étape de préenregistrement d'informations utilisées pour compenser, à l'enregistrement ou à la lecture des informations, le décalage (d) entre l'emplacement réel de chaque altération de ladite couche sur le support et leur emplacement désiré.

9. procédé selon la revendication 8, caractérisé en ce que lesdites informations préenregistrées comprennent des données permettant de calculer un décalage (d) en fonction de paramètres liés à au moins une altération (20) précédemment formée sur le support.

10. Procédé selon la revendication 9, caractérisé en ce que les paramètres liés à l'altération (20) précédemment formée sont sa longueur (1) et la distance ($l_1$) séparant cette altération de l'altération (21) à former.

11. Procédé selon l'une quelconque des revendications 1 à 10, caractérisé en ce que ledit support est constitué par un disque.

12. Dispositif pour la mise en oeuvre du procédé selon l'une quelconque des revendications 1 à 11, caractérisé en ce qu'il comprend des moyens (D) pour détecter des altérations ($M_1$, $M_2$), références de longueurs et des altérations ($d_1$, $d_2$, $d_3$) représentant l'information enregistrée, et de leur conversion en signaux électriques ($T'_0$, $T'_N$, $T'_x$), des moyens (C) pour convertir les longueurs des altérations détectées en des nombres ($n_1$, $n_2$, $n_x$) proportionnels à ces longueurs, des moyens (MEM) pour mémoriser au moins les nombres ($n_1$, $n_2$) correspondant à la détection desdites altérations ($M_1$, $M_2$) référence de longueurs et des moyens de calcul (CAL) pour la détermination du nombre d'incréments ($N_x$) associés à chaque élément d'information détecté et converti en signal électrique ($T'_x$), à partir desdits nombres ($n_1$, $n_2$, $n_x$) et du nombre maximum d'incréments (N).

13. Dispositif selon la revendication 12, caractérisé en ce que lesdits moyens pour convertir les longueurs des altérations en nombres ($n_1$, $n_2$, $n_x$) comprennent un compteur numérique (C) recevant et comptant des signaux d'horloge ($H_R$) de fréquence plus élevée que la fréquence d'occurence de détection des altérations, un circuit logique ($LO_1$) permettant le comptage pendant les seules périodes ($T'_0$, $T'_n$, $T'_x$) de détection desdites altérations et des moyens (MON) de remise à l'état initiale du compteur (C) après la fin de la détection desdites altérations.

14. Dispositif selon la revendication 12, caractérisé en ce qu'il comprend en outre un circuit logique (VAL) autorisant ladite détermination du nombre d'incréments ($N_x$) pendant les seules périodes séparant deux détections d'altérations ($d_1$, $d_2$, $d_3$) représentant des informations.

## Claims

1. Method of recording/reading information along tracks of a movable medium given a uniform drive speed comprising a phase of recording the said information, this phase comprising a step of forming variable-length alterations ($d_1$ to $d_3$) in a layer of material of the medium with the aid of means for converting variable-duration pulsed information signals ($I_0$ to $I_N$), the transitions between altered regions and unaltered regions of the said layer representing information, and an aditional step of forming an alteration serving as length reference and a phase of reading using the said length reference so as to reconstruct the recorded information characterized in that the additional step comprises the forming a series of sequences of alterations ($M_1$, $M_2$) in the said layer, of different lengths and at least equal to two in number within each sequence with the aid of conversion means, each sequence of alterations being associated with a particular area (area $Z_2$) in which are formed the alterations ($d_1$ to $d_3$) representing information and forming a length reference for this area ($Z_2$); and in that the reading phase comprises a step of reading the length-reference alterations ($M_1$, $M_2$) and converting them into duration-reference pulsed signals, for the associated area ($Z_2$), a step of reading the alterations ($d_1$ to $d_3$) representing information formed in the said associated areas (area $Z_2$) and converting them into pulsed signals and a step of reproducing the recorded information by comparison with the duration-reference pulsed signals.

2. Method according to Claim 1, characterized in that the pulsed information signals ($I_0$ to $I_N$) being modulation signals digitally coded in duration, by jumps of time increments (T), the said length-reference alterations ($M_1$, $M_2$) are distributed over the medium in pairs and formed by conversion of pulsed signals of a first duration ($T_0$) and of a second duration ($T_0 + N\Delta T$), these durations differing by at least one time increment $\Delta T$).

3. Method according to Claim 2, characterized in that the said first duration ($T_0$) is chosen such that the alteration ($M_1$) obtained with the aid of the signal of this duration has a minimal length ($I_0$), this length being in a one-to-one relation with a minimal duration ($T_0$) of the modulation signals, and the said second duration ($T_0 + N\Delta T$) is chosen such that the alteration ($M_2$) obtained with the aid of the signal of this duration has the said minimal length ($I_0$), to which is added a defined number of increments N

of length ($\Delta l$), N being equal to the maximum number of time increments ($\Delta t$) of the modulation signals; and in that the step of reproducing the recorded information comprises the determining of the durations ($T_0$, $T'_N$) of the converted signals corresponding to the alterations ($M_1$, $M_2$) serving as length reference, and the determination, on the basis of these durations, of parameters in one-to-one relation with the said minimal duration ($T_0$) and the time increment ($\Delta T$).

4. Method according to Claim 3, characterized in that the reproduction step comprises the calculation of the duration of one time increment by subtraction from the duration ($T'_N$) of the signal resulting from the conversion of the alteration ($M_2$) of maximal length ($I_0 + N\Delta l$), of the duration ($T'_0$) of the signal resulting from the conversion of the alteration ($M_1$), of minimal length ($I_0$), followed by the division by the said number N, this time increment serving as a reference for the said associated area (area $Z_2$).

5. Method according to any one of Claims 1 to 4, characterized in that the fluctuations of the parameters associated with the reference marks ($M_1$, $M_2$) are stored in memory and in that comparisons are made with reference values in order to ignore the marks of which the said associated parameters are outside a predetermined range.

6. Method according to any one of Claims 1 to 5, characterized in that, the said medium being equipped with a superficial thermosensitive layer, the alterations ($d_x$) consist of a localized ablation of the said layer by irradiation of the latter with the aid of a laser beam.

7. Method according to any one of Claims 1 to 6, characterized in that the said medium including, alternately, distributed along the tracks, areas of a first type (area $Z_1$) in which alterations are formed during a preliminary, pre-recording phase, and areas of a second type (area $Z_2$) intended for recording the said information, the sequences of length-reference alterations ($M_1$, $M_2$) are formed in a defined region of the areas of the first type and are associated with a contiguous area (area $Z_1$) of the second type (area $Z_2$).

8. Method according to Claim 7, characterized in that it comprises, in a preliminary phase, a step of pre-recording information used to compensate, upon recording or upon reading information, for the offset (d) between the actual site of each alteration of the said layer on the medium and their desired site.

9. Method according to Claim 8, characterized in that the said prerecorded information comprise data making it possible to calculate an offset (d) as a function of parameters related to at least one alteration (20) previously formed on the medium.

10. Method according to Claim 9, characterized in that the parameters relating to the previously formed alteration (20) are its length (l) and the distance ($l_1$) separating this alteration from the alteration (21) to be formed.

11. Method according to any one of Claims 1 to 10, characterized in that the said medium consists of a disk.

12. Device for implementing the method according to any one of Claims 1 to 11, characterized in that it comprises means (D) for detecting length-reference alterations ($M_1$, $M_2$) and alterations ($d_1$, $d_2$, $d_3$) representing the recorded information, and for converting them into electrical signals ($T'_0$, $T'_N$, $T'_x$), means (C) for converting the lengths of the detected alterations into numbers ($n_1$, $n_2$, $n_x$) proportional to these lengths, means (MEM) for storing in memory at least the numbers ($n_1$, $n_2$) corresponding to the detection of the said length-reference alterations ($M_1$, $M_2$) and calculating means (CAL) for determining the number of increments ($N_x$) associated with each information element detected and converted into an electrical signal ($T'_x$), on the basis of the said numbers ($n_1$, $n_2$, $n_x$) and of the maximum number of increments (N).

13. Device according to Claim 12, characterized in that the said means for converting the lengths of the alterations into numbers ($n_1$, $n_2$, $n_x$) comprises a digital counter (C) receiving and counting clock signals ($H_R$) of much higher frequency than the frequency of occurrence of alteration detection, a logic circuit ($LO_1$) allowing counting only during the periods ($T'_0$, $T'_n$, $T'_x$) of detection of the said alterations and means (MON) for resetting the counter (C) to the initial state after the end of the detection of the said alterations.

14. Device according to Claim 12, characterized in that it further comprises a logic circuit (VAL) enabling the said determination of the number of increments ($N_x$) only during the periods separating two detections of alterations ($d_1$, $d_2$, $d_3$) representing information.

**Patentansprüche**

1. Verfahren zum Aufzeichnen und Lesen von Informationen längs der Spuren eines beweglichen Trägers, der zu einer gleichmäßigen Vorbeibewegungsgeschwindigkeit angetrieben wird, mit einer Phase der Aufzeichnung der Informationen, wobei diese Phase einen Schritt der Bildung von Veränderungen ($d_1$ bis $d_3$) mit unterschiedlichen Längen einer Materialschicht des Trägers mit Hilfe von Mitteln zur Umsetzung von Impulsinformationssignalen ($I_0$ bis $I_N$) mit unterschiedlichen Zeitdauern, wobei die Übergänge zwischen den veränderten Bereichen und den nicht veränderten Bereichen der Schicht Informationen darstellen, sowie einen zusätzlichen Schritt der Bildung einer Veränderung, die als Längenreferenz dient, enthält, und einer Lesephase, die die Referenzlänge für die Wiederherstellung der aufgezeichneten Informationen verwendet, dadurch gekennzeichnet, daß der zusätzliche Schritt die Bildung einer Reihe von Sequenzen von Veränderungen ($M_1$, $M_2$) der Schicht mit unterschiedlichen Längen und in einer Anzahl, die in jeder Sequenz wenigstens gleich zwei ist, mit Hilfe der Umsetzungsmittel enthält, wobei jede Sequenz von Veränderungen einer besonderen Zone (Zone $Z_2$) zugeordnet ist, in der die die Informationen darstellenden Veränderungen ($d_1$ bis $d_3$) gebildet sind, und die Längenreferenz für diese Zone ($Z_2$) bildet; und daß die Lesephase einen Schritt des Lesens der Längenreferenz-Veränderungen ($M_1$, $M_2$) und ihre Umsetzung in Zeitdauer-referenz-Impulssignale für die zugeordnete Zone ($Z_2$), einen Schritt des Lesens von Veränderungen ($d_1$ bis $d_3$), die die in den zugeordneten Zonen (Zone $Z_2$) gebildeten Informationen darstellen, und ihrer Umsetzung in Impulssignale sowie einen Schritt der Wiederherstellung der aufgezeichneten Informationen durch Vergleich mit den Zeitdauerreferenz-Impulssignalen enthält.

2. Verfahren nach Anspruch 1, dadurch gekennzeichnet, daß dann, wenn die Impulsinformationssignale ($I_0$ bis $I_N$) Modulationssignale sind, die hinsichtlich der Zeitdauer durch Zeitinkrementsprünge (DT) digital codiert sind, die Längenreferenz-Veränderungen ($M_1$, $M_2$) auf dem Träger paarweise verteilt sind und durch Umsetzung von Impulssignalen einer ersten Zeitdauer ($T_0$) und einer zweiten Zeitdauer ($T_0$ + NDT) gebildet sind, wobei sich diese Zeitdauern um wenigstens ein Zeitinkrement (DT) unterscheiden.

3. Verfahren nach Anspruch 2, dadurch gekennzeichnet, daß die erste Dauer ($T_0$) in der Weise gewählt ist, daß die Veränderung ($M_1$), die mit Hilfe des Signals dieser Dauer erhalten wird, eine minimale Länge ($I_0$) hat, wobei diese Länge mit der minimalen Dauer ($T_0$) der Modulationssignale in einer eineindeutigen Beziehung steht, und die zweite Dauer ($T_0$ + NDT) in der Weise gewählt ist, daß die Veränderung ($M_2$), die mit Hilfe des Signals dieser Zeitdauer erhalten wird, die minimale Länge ($I_0$) besitzt, der eine bestimmte Anzahl von Inkrementen der Länge ($D_1$) hinzugefügt ist, wobei N gleich der maximalen Anzahl von Zeitinkrementen (Dt) der Modulationssignale ist; und daß der Schritt der Wiederherstellung der aufgezeichneten Informationen die Bestimmung der Zeitdauern ($T'_0$, $T'_N$) der umgesetzten Signale, die den als Längenreferenz dienenden Veränderungen ($M_1$, $M_2$) entsprechen, sowie die Bestimmung von Parametern anhand dieser Zeitdauern enthält, die mit der minimalen Zeitdauer ($T_0$) und dem Zeitinkrement (DT) in einer eineindeutigen Beziehung stehen.

4. Verfahren nach Anspruch 3, dadurch gekennzeichnet, daß der Schritt der Wiederherstellung die Berechnung der Zeitdauer eines Zeitinkrements durch Subtraktion der Zeitdauer ($T'_N$) des Signals, das sich aus der Umsetzung der Veränderung ($M_2$) mit maximaler Länge ($l_0$ + NDI) ergibt, von der Dauer ($T'_0$) des Signals, das sich aus der Umsetzung der Veränderung ($M_1$) mit minimaler Länge ($l_0$) ergibt, gefolgt von der Division durch die Zahl N, enthält, wobei dieses Zeitinkrement als Referenz für die zugeordnete Zone (Zone $Z_2$) dient.

5. Verfahren nach irgendeinem der Ansprüche 1 bis 4, dadurch gekennzeichnet, daß die Schwankungen der den Referenzmarkierungen ($M_1$, $M_2$) zugeordneten Parameter gespeichert werden und daß Vergleiche mit den Referenzwerten ausgeführt werden, um die Markierungen zu vernachlässigen, deren zugeordnete Parameter außerhalb eines vorgegebenen Bereichs liegen.

6. Verfahren nach irgendeinem der Ansprüche 1 bis 5, dadurch gekennzeichnet, daß die Veränderungen ($d_x$) dann, wenn der Träger mit einer wärmeempfindlichen Oberflächenschicht versehen ist, durch lokale Abschmelzung der Schicht durch deren Bestrahlung mit Hilfe eines Laserstrahlenbündels gebildet werden.

7. Verfahren nach irgendeinem der Ansprüche 1 bis 6, dadurch gekennzeichnet, daß der Träger abwechselnd und auf die Länge der Spuren verteilt Zonen eines ersten Typs (Zone $Z_1$), in denen Veränderungen während einer vorausgehenden Voraufzeichnungsphase gebildet werden, sowie Zonen eines zweiten Typs (Zone $Z_2$), die für die Aufzeichnung der Informationen bestimmt sind, enthält, wobei die Sequenzen von Längenreferenz-Veränderungen ($M_1$, $M_2$) in einem bestimmten Bereich der Zonen des ersten Typs gebildet sind und einer Zone (Zone $Z_1$), die an den zweiten Typ (Zone $Z_2$) angrenzt, zugeordnet sind.

8. Verfahren nach Anspruch 7, dadurch gekennzeichnet, daß es in einer vorausgehenden Phase einen Schritt der Voraufzeichnung von Informationen enthält, welche bei der Aufzeichnung oder beim Lesen von Informationen für die Kompensation der Verschiebung (d) zwischen der wirklichen Stelle jeder Veränderung der Schicht auf dem Träger und ihrer gewünschten Stelle verwendet werden.

9. Verfahren nach Anspruch 8, dadurch gekennzeichnet, daß die im voraus aufgezeichneten Informationen Daten enthalten, die die Berechnung einer Verschiebung (d) in Abhängigkeit von Parametern ermöglichen, die mit wenigstens einer vorher auf den Träger gebildeten Veränderung (20) in Beziehung stehen.

10. Verfahren nach Anspruch 9, dadurch gekennzeichnet, daß die mit der vorher gebildeten Veränderung (20) in Beziehung stehenden Parameter deren Länge (l) und deren Abstand ($l_1$), der diese Veränderung von der zu bildenden Veränderung (21) trennt, sind.

11. Verfahren nach irgendeinem der Ansprüche 1 bis 10, dadurch gekennzeichnet, daß der Träger durch eine Scheibe gebildet ist.

12. Vorrichtung zur Ausführung des Verfahrens nach irgend-einem der Ansprüche 1 bis 11, dadurch gekennzeichnet, daß sie Mittel (D) für die Erfassung von Längenreferenz-Veränderungen ($M_1$, $M_2$) und von Veränderungen ($d_1$, $d_2$, $d_3$), die die aufgezeichnete Information darstellen, und für ihre Umsetzung in elektrische Signale ($T'_0$, $T'_N$, $T'_x$), Mittel (C) zum Umsetzen der Längen der erfaßten Veränderungen in Zahlen ($n_1$, $n_2$, $n_x$), die zu diesen Längen proportional sind, Mittel (MEM) zum Speichern wenigstens der Zahlen ($n_1$, $n_2$), die der Erfassung der Längenreferenz-Veränderungen ($M_1$, $M_2$) entsprechen, sowie Rechenmittel (CAL) für die Bestimmung der Anzahl von Inkrementen ($N_x$), die jedem erfaßten und in ein elektrisches Signal ($T'_x$) umgesetzten Informationselement zugeordnet sind, anhand der Zahlen ($n_1$, $n_2$, $n_x$) und der maximalen Anzahl von Inkrementen (N) enthält.

13. Vorrichtung nach Anspruch 12, dadurch gekennzeichnet, daß die Mittel zum Umsetzen der Längen der Veränderungen in Zahlen ($n_1$, $n_2$, $n_x$) einen digitalen Zähler (C), der die Taktsignale ($H_R$) empfängt und zählt, deren Frequenz höher als die Frequenz des Auftretens der Erfassung der Veränderungen ist, eine Logikschaltung ($LO_1$), die die Zählung nur während der Perioden ($T'_0$, $T'_n$, $T'_x$) der Erfassung der Veränderungen ermöglicht, sowie Mittel (MON) zur Rücksetzung des Zählers (C) in den Anfangszustand nach dem Ende der Erfassung der Veränderungen enthalten.

14. Vorrichtung nach Anspruch 12, dadurch gekennzeichnet, daß sie außerdem eine Logikschaltung (VAL) enthält, die die Bestimmung der Anzahl von Inkrementen ($N_x$) nur während der Perioden zuläßt, die zwei Erfassungen von Informationen darstellenden Veränderungen ($d_1$, $d_2$, $d_3$) trennen.

FIG.1

FIG.2

FIG.3

FIG.4

FIG.5

FIG.6

FIG.7

FIG.8

FIG.9

EP 0 609 398 B1

# FIG.10

$$N_x = \left(\frac{n_x - n_1}{n_2 - n_1}\right)N$$

# FIG.12

$(n_1, n_2)$     $(n_x)$

# FIG.13

FIG.11